# EUROPEAN PATENT APPLICATION

(11) **EP 4 836 116 A2**
(43) Date of publication of application: **04.11.2026**
(21) Application number: 26188633.7
(22) Date of filing: 25.06.2019
(51) Int. Cl.: H01M 50/20

(54) **BATTERY FRAME**

(30) Priority: 25.06.2018 US 201862689629 P
(62) Document number(s) of the earlier application(s) in accordance with Art. 76 EPC: 19826635.5 / 3 811 436
(71) Applicant: Magna International Inc., Aurora, ON L4G 7K1 (CA)
(72) Inventor: BLUEMEL, Michael, 2620 Flatz (AT)
(74) Representative: Grünecker Patent- und Rechtsanwälte PartG mbB

(57) **Abstract**

A battery frame for holding one or more battery boxes includes an outer frame surrounding an interior space and formed from a plurality of structural members including first rails extending parallel to and spaced apart from one another and second rails between the first rails and perpendicularly thereto. The outer frame defines a top extending in a flat plane and a bottom. Each of the first rails includes a mounting flange extending outwardly away from the interior space for holding the battery frame to a vehicle structure. One or more battery boxes are disposed within the interior space of the outer frame and are removable from below the outer frame with the outer frame mounted within a vehicle. Support members and cross-beams provide structural rigidity, distribute or absorb crash loads, and hold one or more of the battery boxes within the battery frame.

## Description

### CROSS-REFERENCE TO RELATED APPLICATIONS

This PCT International Patent Application claims the benefit of U.S. Provisional Patent Application Serial No. 62/689,629 filed on June 25, 2018, and titled "Battery Frame", the entire disclosure of which is hereby incorporated by reference.

### FIELD

The present disclosure relates generally to a battery frame. More specifically, the present disclosure relates to a battery frame for an electrified vehicle.

### BACKGROUND

Electrified vehicles, such as such as battery electric vehicles (EVs) and plug-in hybrid electric vehicles (PHEVs), rely upon batteries to store electrical energy. Packing of batteries within such electrified vehicles requires a number of design considerations, including weight distribution, temperature regulation, and serviceability.

There is a large and growing market for electric vehicles, and particularly for electric vehicles having batteries that are configured to be serviceable without requiring an entire conventional battery pack to be removed from the vehicle, which may require special equipment and/or training due to the size and weight of conventional battery packs.

### SUMMARY

The present disclosure provides a battery frame comprising a plurality of structural members defining an outer frame having a flat shape with a length and a width and a height shorter than the length and shorter than the width. At least one battery box is disposed within the outer frame and is removable from below the outer frame with the outer frame mounted within a vehicle.

### BRIEF DESCRIPTION OF THE DRAWINGS

Further details, features and advantages of designs of the invention result from the following description of embodiment examples in reference to the associated drawings, in which a battery frame is disclosed.
FIG. 1 is a partially exploded perspective view of a battery frame and a battery box in accordance with an aspect of the disclosure;
FIG. 2 is a perspective view of a battery frame holding two battery boxes;
FIG. 3 is a perspective view of the battery frame of FIG. 2 with transparent lids to show structure within the battery boxes in accordance with an aspect of the disclosure;
FIG. 4 is an exploded view of the battery frame of FIG. 2;
FIG. 5 is a perspective cut-away view of the battery frame of FIG. 2;
FIG. 6 is an enlarged view of section 6 of FIG. 5
FIG. 7 is a perspective view of a battery box;
FIG. 8 is an enlarged view of section 8 of the battery box of FIG. 7;
FIG. 9 is a cross-sectional view of the battery box of FIG. 7 along line A-A.
FIG. 10 is a perspective view of a battery frame in accordance with an aspect of the disclosure;
FIG. 11 is a perspective view of the battery frame of FIG. 10 with a partial transparency to illustrate internal structure;
FIG. 12 is an exploded view of the battery frame of FIG. 10;
FIG. 13 is a perspective cut-away view of the battery frame of FIG. 10;
FIG. 14 is an enlarged view of section 14 of FIG. 13;
FIG. 15 is a cross-sectional view of the battery box of FIG. 13 along line B-B;
FIG. 16 is a perspective view of a battery frame holding three battery boxes in accordance with an aspect of the disclosure;
FIG. 17 is a cross-sectional view of the battery frame of FIG. 16 along line C-C;
FIG. 18 is an exploded view of the battery frame of FIG. 16;
FIG. 19 is a perspective cut-away view of the battery frame of FIG. 16;
FIG. 20 is an enlarged view of section 20 of FIG. 19;
FIG. 21 is an enlarged view of section 21 of FIG. 19;
FIG. 22 is a perspective view of a battery frame in accordance with an aspect of the disclosure;
FIG. 23 is a perspective view of the battery frame of FIG. 22 with a partial transparency to show internal structure;
FIG. 24 is an exploded view of the battery frame of FIG. 22;
FIG. 25 is a perspective cut-away view of the battery frame of FIG. 22;
FIG. 26 is a cross-sectional view of the battery frame of FIG. 25 along line D-D;
FIG. 27 is a perspective view of a battery frame holding three battery boxes in accordance with an aspect of the disclosure;
FIG. 28 shows a cross-section of the battery frame of FIG. 27 along line E-E; and
FIG. 29 is an exploded view of the battery frame of FIG. 27.

### DETAILED DESCRIPTION

Recurring features are marked with identical reference numerals in the figures, in which example embodiments of a battery frame are disclosed. The present disclosure provides a battery frame comprising a plurality of structural members defining an outer frame having a flat shape with a length and a width and a height that is shorter than the length and shorter than the width. At least one battery box is disposed within the outer frame and is removable from below the outer frame with the outer frame mounted within a vehicle. In some embodiments, the height is substantially shorter than each of the length and the width.

In some embodiments, the battery frame includes two or more battery boxes that are each configured to be independently installed within the outer frame. In some embodiments, the battery frame includes a battery chamber for holding batteries, with the battery chamber being watertight independent of any structurally-loaded joints. In other words, the battery chamber or chambers may remain watertight even if all structurally-loaded joints are or become permeable to water. In some embodiments, the structural members include a first structural member joined to a second structural member by a structural joint configured to hold a load force, and a watertight seal extends between the first structural member the second structural member and spaced apart from the structural joint. The structural joint may include a friction stir weld. Alternatively or additionally, the watertight seal may include a friction stir weld.

In some embodiments, the structural members may comprise two first rails extending parallel to and spaced apart from one another and two second rails extending parallel to and spaced apart from one another and perpendicular to the first rails. At least one of the first rails or the second rails may be formed of metal having a constant cross-section along all or substantially all of a length thereof. In some embodiments, at least one of the first rails or the second rails is formed of extruded aluminum.

In some embodiments, the battery frame includes two or more battery boxes having different sizes. In some embodiments at least one battery box of the battery frame comprises a housing having a peripheral wall and a floor pan and defining an open top, with a lid enclosing the open top of the housing. Furthermore, the battery box may be held within the outer frame by a bracket supporting the battery box and with a fastener connecting the bracket to one of the structural members of the outer frame.

In some embodiments, at least one battery box of the battery frame includes a cover sealed to a baseplate of extruded metal. The cover may include a lower flange disposed between the baseplate and one of the structural members of the outer frame. The baseplate of extruded metal may comprise two elongate members of extruded metal secured together along an adjoining side edge of each of the two elongate members. In some embodiments, a structural weld secures the two elongate members of the baseplate together, and a watertight seal extends between the two elongate members and spaced apart from the structural weld.

In some embodiments, at least one battery box of the battery frame comprises a housing having an open bottom, and a floor plate enclosing the open bottom of the housing, the floor plate extending outwardly beyond the housing to define a peripheral flange, with the battery box secured within the outer frame by a fastener to connect the peripheral flange to one of the structural members of the outer frame.

The battery frame of the present disclosure provides for a functional separation by mounting one or more individual battery boxes into one outer frame from below. The functional separation may aid in mounting, assembly, and maintenance of batteries within a vehicle. The battery frame of the present disclosure provides several advantages over conventional battery frames. It provides for battery boxes to be separated from an outer frame in case of a crash, it allows the outer frame to remain within the vehicle during service or in case of repair that necessitates removing one or more battery cells. The battery frame of the present disclosure provides for higher flexibility and easier handling of individual battery boxes when compared with conventional electrified vehicle battery packs. It may provide for enhanced scalability by incorporating two or more battery boxes having different sizes and/or for configuring the battery frame that can be upgraded or downgraded by addition or removal of battery boxes. It also provides for a combination of different materials to be used to optimize the design for various design parameters including, for example, weight, strength, structural rigidity, and cost. In some embodiments, the battery frame is constructed with load absorbing joints separated from watertight joints, such that no structurally-loaded joints are also relied upon to make any portion of the battery frame watertight.

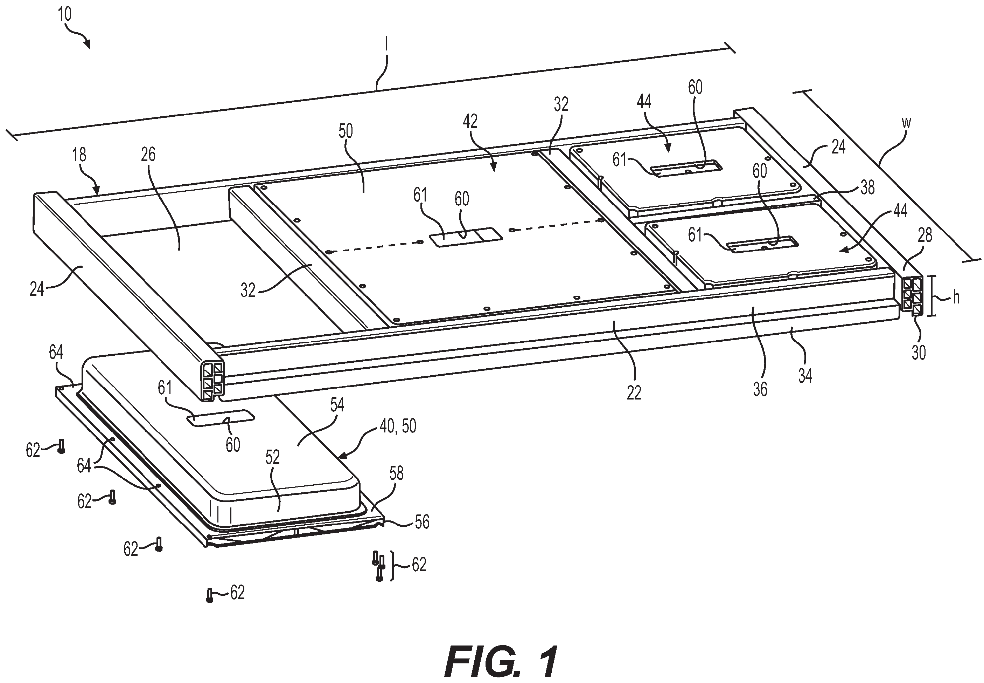

FIG. 1 is a partially exploded perspective view of a battery frame **10** in accordance with some embodiments of the disclosure. The battery frame **10** includes an outer frame **18** formed from a plurality of structural members **22, 24**. In some embodiments, and as shown in FIG. 1, the structural members **22, 24** include a set of two first rails **22** extending parallel to and spaced apart from one another. The structural members **22, 24** also include a set of two second rails **24** extending parallel to and spaced apart from one another and extending between the first rails **22** and perpendicularly thereto. The structural members **22, 24** of the outer frame **18** surround an interior space **26**. Together, the structural members **22, 24** define a flat rectangular shape with a length ***l*** and a width ***w*** and a height ***h*** that is substantially shorter than the length ***l*** and substantially shorter than the width ***w***. The outer frame **18** defines a top **28** extending in a flat plane and a bottom **30** parallel to the top **28** and spaced apart therefrom by the height ***h*** of the outer frame **18**. A pair of cross-beams **32** extend between the first rails **22** within the interior space **26**. The cross-beams **32** may serve a number of different purposes, including holding and/or distributing weight of one or more battery boxes **40, 42**, to increase stiffening or structural rigidity of the battery frame **10**, and/or distributing or absorbing crash loads.

As shown in FIG. 1, each of the first rails **22** includes a mounting flange **34** extending outwardly away from the interior space **26** for holding the battery frame **10** to a vehicle structure. The first rails **22** each define a cutout area **36** above the mounting flanges **34** to receive a corresponding portion of the vehicle. The mounting flanges **34** and the corresponding cutout areas **36** of the first rails **22** may function to locate the battery frame **10** within the vehicle structure.

One or more battery boxes **40, 42, 44** are disposed within the interior space **26** of the outer frame **18** and are removable from below the outer frame **18** with the outer frame **18** mounted within a vehicle. In other words, the battery frame **10** is configured to allow one or more of the battery boxes **40, 42, 44** to be removed and/or installed through the bottom **30** of the outer frame **18** while the outer frame **18** is installed within a vehicle. The battery frame **10** may, for example, be mounted within a floor and/or between frame rails of a vehicle such as a passenger car or truck. Each of the battery boxes **40, 42, 44** may be separately or independently removable and/or installable from below the outer frame **18** with the battery frame **10** mounted as all or part of a lower part of a vehicle. This may improve serviceability and/or manufacturability when compared to conventional (unitary) battery packs, which can weigh several hundred pounds, by allowing individual ones of the battery boxes **40, 42, 44** to be installed or replaced without requiring the entire battery frame **10** to be removed from the vehicle.

In some embodiments, and as shown in FIG. 1, two or more battery boxes **40, 42, 44** having different sizes are disposed within the battery frame **10**. Specifically, FIG. 1 shows a first battery box **40** shown removed from the outer frame **18** for illustrative purposes. FIG. 1 also shows a second battery box **42** larger than the first battery box **40** and mounted between two of the cross-beams **32**. FIG. 1 also shows a set of two third battery boxes **44**, which may each have a similar or identical construction. A support member **38** extends through the interior space **26** between the two third battery boxes **44** from one of the cross-beams **32** to one of the second rails **24**. The battery frame **10** may include any number of support members **38**, which may serve a number of different purposes, including stiffening or structural rigidity of the battery frame **10**, and/or distributing or absorbing crash loads. The cross-beams **32** and/or the support members **38** may also function as mounting supports for holding one or more of the battery boxes **40, 42, 44** within the battery frame **10**.

Each of the battery boxes **40, 42, 44** includes a housing **46** with a lid **54** that is co-planar with the top **28** of the outer frame **18** with the corresponding one of the battery boxes **40, 42, 44** installed within the battery frame **10**. The lids **54** of each of the battery boxes **40, 42, 44** define a port **60** to provide access to a battery chamber **61** within the housing **46**. The battery chamber **61** may be configured to hold one or more battery cells. The battery chamber **61** may also be configured to hold ancillary equipment, such as electrical conductors for charging and discharging the battery cells and/or temperature regulation equipment, such as heaters, radiators, or conduits for conveying heating or cooling fluids. The port **60** may be used for electrical connections to one or more external conductors (not shown) and/or for coolant fluid connections between the corresponding one of the battery boxes **40, 42, 44** and external fluid conduits (not shown).

In some embodiments, and as shown in FIG. 1, the first battery box **40** includes the housing **50** having an inverted-tray shape with a peripheral wall **52** fixed to or integrally formed with the lid **54**. The peripheral wall **52** is fixed to a baseplate **56** along a box flange **58** that extends outwardly from the peripheral wall opposite the lid **54**. The baseplate **56** may have a generally flat shape to enclose the bottom of the housing **50** of the first battery box **40**. The baseplate **56** may be formed from one or more pieces of extruded metal, such as aluminum, magnesium, or an alloy of two or more metals. The pieces of extruded metal may have a constant cross-section along all or substantially all of their length. Alternatively, the baseplate **56** may be formed from one or more sheets of material, such as metal. Other materials, such as, for example, composites or polymers, may be used to form the housing **50** and/or the baseplate **56** of the battery boxes **40, 42, 44**.

The battery boxes **40, 42, 44** are secured within the battery frame **10** using one or more mounting screws **62** to hold corresponding portions of the battery boxes **40, 42, 44** to one or more of the structural members **22, 24** of the outer frame **18** and/or to one or more of the cross-beams **32** and/or the support members **38**. The mounting screws **62** may extend through corresponding holes **64** in the box flanges **58**. Other types of fasteners may be used to secure the battery boxes **40, 42, 44** within the battery frame **10**. Such fasteners may include, for example, bolts, nuts, rivets, clips, clamps, tabs, or latches.

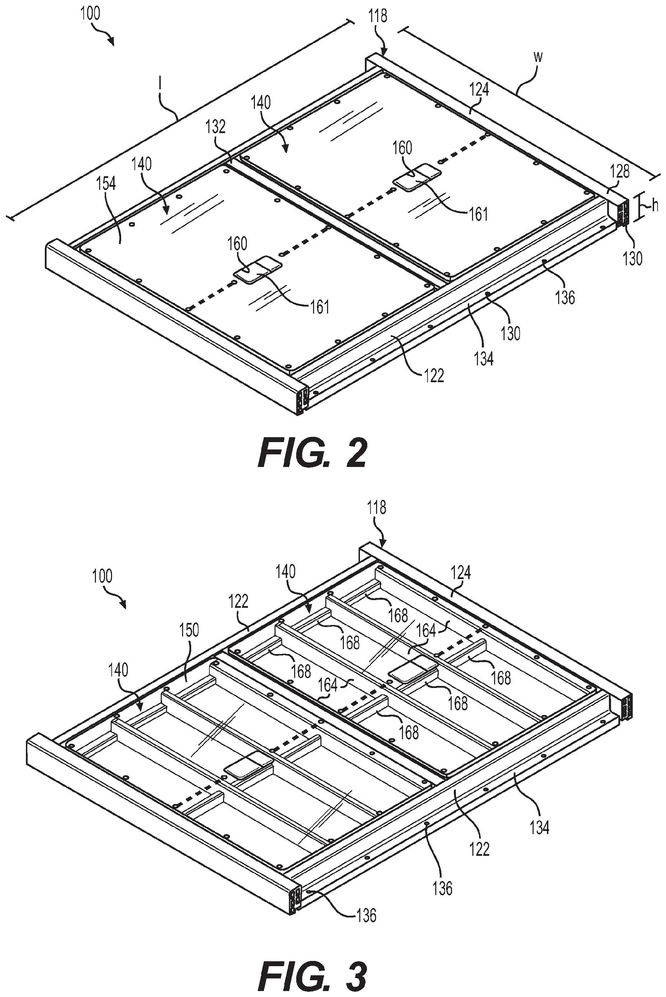

FIGS. 2-6 show a battery frame **100** holding two battery boxes **140** in accordance with some embodiments. Specifically, the battery frame **100** includes an outer frame **118** formed from structural members **122, 124** including a set of two first rails **122** extending parallel to and spaced apart from one another. The structural members **122, 124** also include a set of two second rails **124** extending parallel to and spaced apart from one another and extending between the first rails **122** and perpendicularly thereto. Together, the structural members **122, 124** surround an interior space **126**. The first rails **122** each include a mounting flange **134** extending outwardly away from the interior space **126** and defining a plurality of through holes **136** at regular intervals along a length of the first rails **122** for receiving fasteners, such as bolts or screws, for holding the battery frame **100** within a vehicle.

A cross-beam **132** extends between the first rails **122** within the interior space **126** mid-way between the second rails **124**. The cross-beam **132** may serve a number of different purposes, including holding and/or distributing weight of one or more battery boxes **140**, to increase stiffening or structural rigidity of the battery frame **100**, and/or distributing or absorbing crash loads.

Two battery boxes **140** are disposed within the interior space **126** of the battery frame **100** on opposite sides of the cross-beam **132**. Each of the battery boxes **140** includes a lid **154** that defines a port **160** to provide access to a battery chamber **161** within the battery box **140**. The ports **160** may be used for electrical connections to one or more external conductors (not shown) and/or for coolant fluid connections between the battery boxes **140** and external fluid conduits (not shown). A pair of upper ribs **162** disposed on an inner surface of the lid **154** within the interior space **126** and on opposite sides of the port **160** to provide structural rigidity.

One or more of the battery boxes **140** are removable from below the outer frame **118** with the outer frame **118** mounted within a vehicle. In other words, the battery frame **100** is configured to allow one or more of the battery boxes **140** to be removed and/or installed through the bottom **130** of the outer frame **118** while the outer frame **118** is installed within a vehicle. The battery frame **100** may, for example, be mounted within a floor and/or between frame rails of a vehicle such as a passenger car or truck. Each of the battery boxes **140** may be separately or independently removable and/or installable from below the outer frame **118** with the battery frame **100** mounted as all or part of a lower part of a vehicle. This may improve serviceability and/or manufacturability when compared to conventional (unitary) battery packs, which can weigh several hundred pounds, by allowing individual ones of the battery boxes **140** to be installed or replaced without requiring the entire battery frame **100** to be removed from the vehicle.

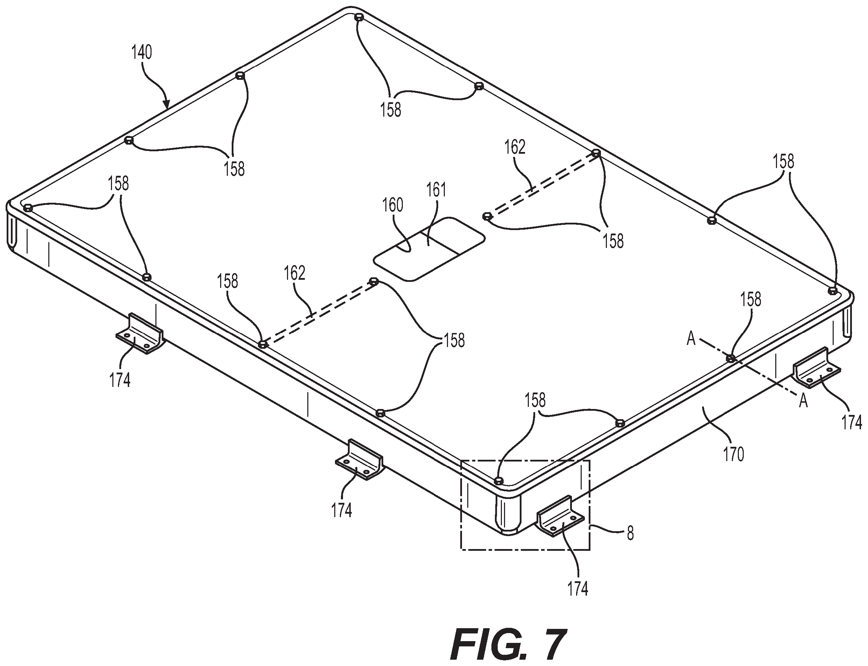

FIG. 3 is a perspective view of the battery frame of FIG. 2 with the battery boxes **140** having a transparent lid **154** to show structure within the battery boxes **140** in accordance with an aspect of the disclosure. Specifically, FIG. 3 shows a stiffening structure **164, 168** within a housing **150** of each of the battery boxes **140**. Each of the battery boxes **140** may have a similar construction, so only one of the battery boxes **140** is labeled in FIG. 3 to simplify the disclosure. The stiffening structures **164, 168** each include four crossbars **164** extending parallel to and spaced apart from one another at regular intervals, with one of the crossbars **164** extending along and adjacent to one of the second rails **124** with the battery box **140** positioned within the outer frame **118**. Another one of the crossbars **164** extends along and adjacent to one of the second rails **122** with the battery box **140** positioned within the outer frame **118**. Each of the crossbars **164** includes an upper portion **166** that extends generally parallel to the lid **154** for receiving lid bolts **158** (shown in FIGS. 7-8), to secure the lid **154** onto the housing **150**. Other types of fasteners, such as screws, clips, or clamps may be used to secure the lid **154** onto the housing **150**. Alternatively or additionally, the lid **154** may be secured onto the housing **150** with an adhesive one and/or one or more or welds. The stiffening structure **164, 168** within each of the battery boxes **140** also includes three lower ribs **168** extending parallel to and spaced apart from one another at regular intervals, with one of the lower ribs **168** extending along and adjacent to corresponding ones of the first rails **122** with the battery box **140** positioned within the outer frame **118**. Each of the stiffening structures **164, 168** may be fixed within a corresponding the housings **150** by welding or by other means, such as with an adhesive. Alternatively or additionally, one or more parts of the stiffening structures **164, 168** may be integrally formed with one or more parts of the housings **150**.

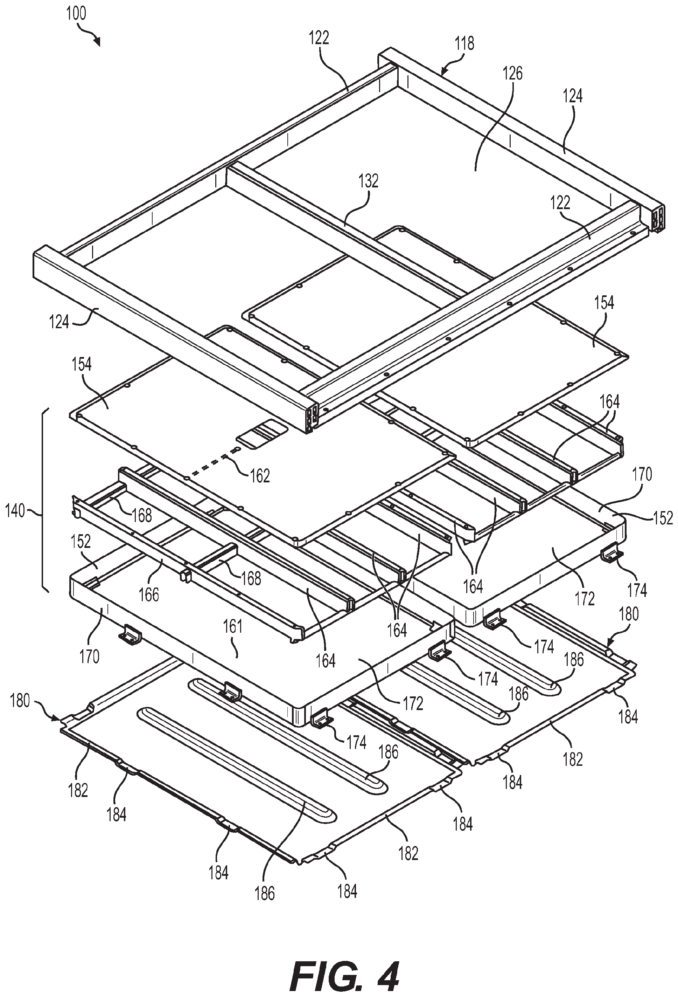

FIG. 4 is an exploded view of the battery frame of FIG. 2. As best shown in FIG. 4, the lower ribs **168** extend perpendicularly to the crossbars **164**. In some embodiments, the lower ribs **168** extend through the crossbars **164**. FIG. 4 also shows details of the housings **150** of the battery boxes **140**. Specifically, each of the housings **150** is formed as an open tray with a peripheral wall **170** extending vertically and perpendicularly from a floor pan **172** that extends in a flat plane and to an open top **152**. One of the lids **154** encloses the open top **152** of each of the housings **150**. A plurality of brackets **174** are welded to the housings **150** for holding the battery boxes **140** within the outer frame **118**. The brackets **174** may be fixed to the housings **150** in other ways, such as with an adhesive or using one or more fasteners.

FIG. 4 also shows a pair of lower plates **180**, each configured to be attached to the outer frame **118** below a corresponding one of the battery boxes **140** for protecting the battery boxes from damage from below. The lower plates **180** may be formed of metal or another resilient material, such as plastic or a composite material to protect the battery boxes **140** from damage due to road debris. The lower plates **180** may also serve to improve performance of the battery frame **100** in various crash tests, such as a bollard crash test. The lower plates **180** may have a generally flat shape with a peripheral edge **182** that is bent upwardly and outwardly and configured to be attached to the outer frame **118**. The peripheral edge **182** includes lowered portions **184** extending downwardly away from the outer frame **118** to accommodate the brackets **174** and fasteners in the brackets **174**. The lower plates **180** each define a pair of indentations **186** that extend for a length upwardly toward the outer frame to provide structural rigidity. The indentations **186** may be formed by rolling or beading the material of the lower plates **180.**

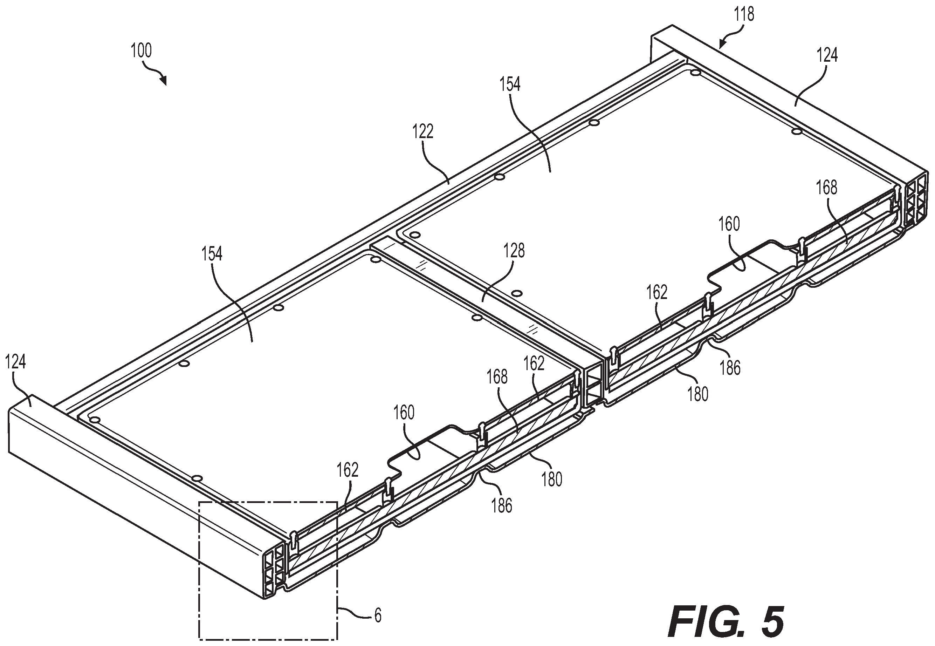

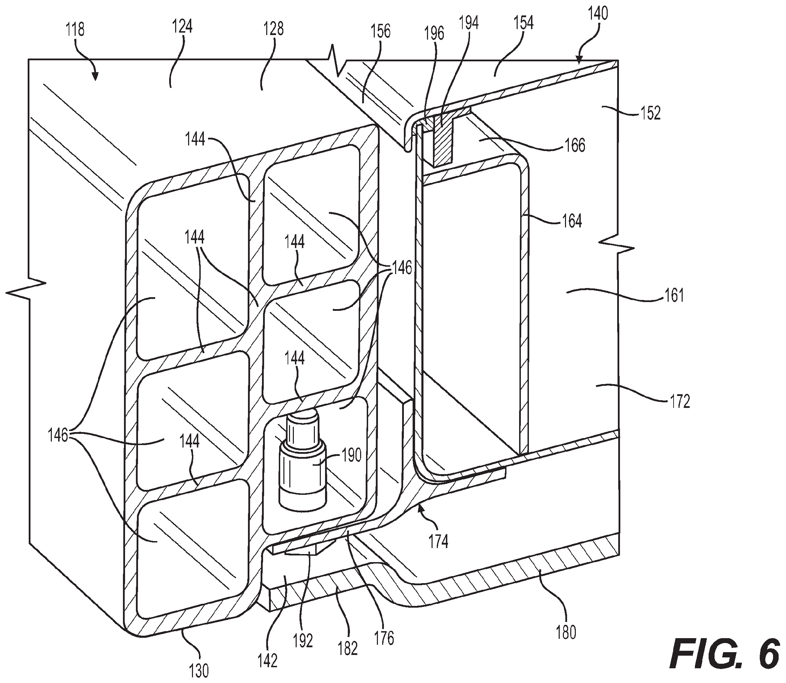

FIG. 5 shows a cross-section of the battery frame **100** of FIG. 2, and FIG. 6 is an enlarged view of section **6** of FIG. 5. Specifically, FIG. 6 shows the connection between one of the battery boxes **140** and the outer frame **118** of the battery frame **100**. FIG. 6 shows a cross-section of one of the second rails **124** having a generally rectangular shape except for a notch **142** in a lower edge thereof. The notch **142** faces the interior space **126** of the outer frame **118** for receiving the brackets **174** and the peripheral edge **182** of the lower plates **180**. FIG. 6 also shows an internal webbing **144** within the second rail **124** to define a plurality of hollow passages **146** each having a generally rectangular cross-section. A first rivet nut **190** extends upwardly into the second rail **124** within the notch **142** for receiving a mounting bolt **192** for holding the bracket **174** to the second rail **124**. More specifically, the bracket **174** has a cross-section shaped as an inverted-T that defines an outward extension **176**, with the mounting bolt **192** extending through the outward extension **176** of the bracket **174** and into the first rivet nut **190**. In other words, each the battery boxes **140** is held within the outer frame **118** by the brackets **174**, which support the battery box **140** with fasteners in the form of the mounting bolts **192**, which connect the bracket **174** to one of the structural members **122, 124** of the outer frame **118**. Other types of fasteners such as, for example, screws, rivets, clips, or clamps may connect the brackets **174** to the outer frame **118.**

As also shown in FIG. 6, a rim **156** extends about a periphery of the lid **154** of the battery box **140** and overhangs the peripheral wall **170**. A spacer **194** of rigid material holds the lid **154** a fixed distance off of an upper portion **166** of one of the crossbars **164**. A gasket **196** of resilient material, such as rubber, is disposed around the top of the peripheral wall **170** and prevents water or other fluids from entering or exiting the interior space **126** of the battery box **140**. The spacer **194** may help the gasket **196** to have a consistent deformation and prevent the gasket **196** from being damaged from concentrated or excessive forces that could be generated by the lid bolts **158** used to hold the lid **154** onto the housing of the battery box **140**.

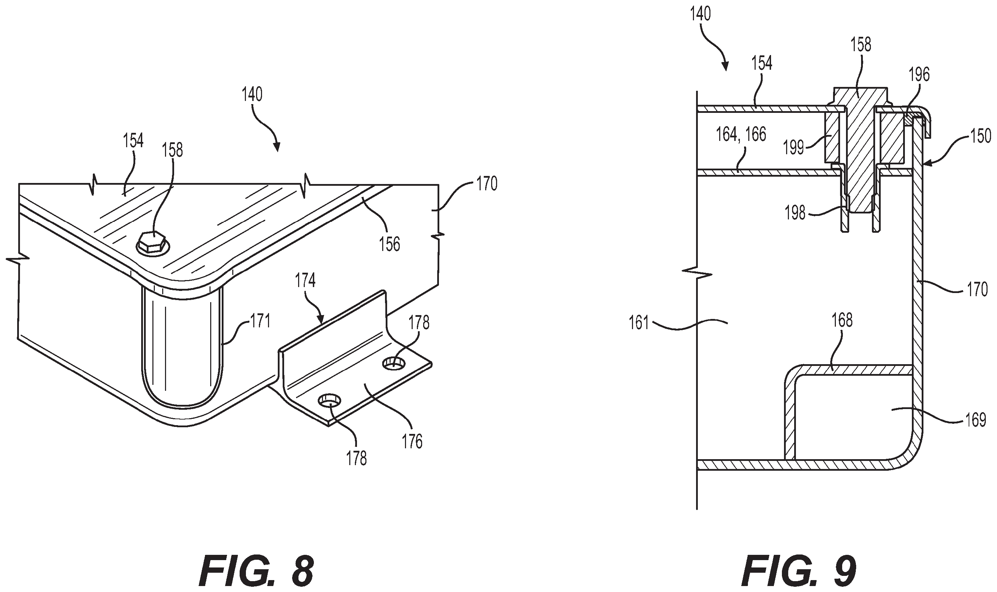

FIGS. 7-9 show additional details of one of the battery boxes **140**. FIG. 8 is an enlarged section of FIG. 7; FIG. 9 is a cross-sectional view of FIG. 7 along line A - A. Specifically, FIG. 8 shows a corner weld **171** at a corner of the peripheral wall **170** to interconnect two perpendicular of the peripheral wall **170**. The corner weld **171** may be a watertight weld, such as a friction stir weld. FIG. 8 also shows one of the lid bolts **158** in an installed position holding the lid **154** onto the housing **150**. FIG. 9 shows a cross-section of the battery box **140** including a second rivet nut **198** disposed within the upper portion **166** of one of the crossbars **164**, with the second rivet nut **198** receiving a lid bolt **158** and thus holding the lid **154** onto the housing **150**. FIG. 8 also shows a standoff sleeve **199** that surrounds the lid bolt **158** and which extends between the second rivet nut **198** and the lid **154**. The standoff sleeve **199** may serve a similar function to the spacer **194**, by holding the lid **154** a fixed distance away from the upper portion **166** of one of the crossbars **164** and to prevent the gasket **196** from being damaged from concentrated or excessive forces that could be generated by the lid bolts. FIG. 8 also shows one of the lower ribs **168** defining a passage **169** that may hold electrical conductors and/or as a conduit for cooling or heating fluid used to regulate the temperature of batteries within the battery box **140**. FIG. 8 also shows two mounting holes **178** in the outward extension **176** and configured to receive the mounting bolt **192** for securing one of the battery boxes **140** onto the outer frame **120**.

The battery frame **100** of FIGS. 2-6 may provide several advantages over other designs, including conventional battery packs. The battery frame **100** may be made without post-machining of weld seams. It provides for separation of outer loads from watertight battery boxes **140**. The battery boxes **140** may be constructed as a simple stamped part with inner reinforcements for holding battery cells. It may provide for smaller battery boxes **140** than conventional designs, which allow for easier repair and handling. The battery boxes **140** can be installed or removed from the outer frame **118** from below, allowing installation or replacement without removing the entire battery frame **100** from the vehicle. The battery frame **100** can be constructed using various combinations of materials.

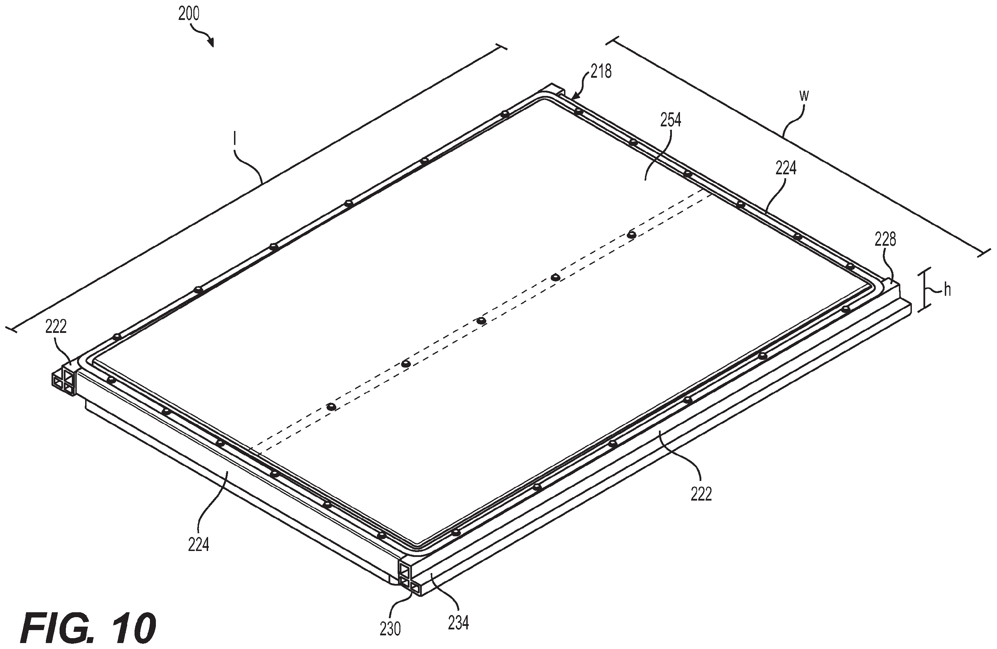

FIGS. 10-15 show a battery frame **200** in accordance with some embodiments. Specifically, the battery frame **200** includes an outer frame **218** formed from structural members **222, 224** including a set of two first rails **222** extending parallel to and spaced apart from one another. The structural members **222, 224** also include a set of two second rails **224** extending parallel to and spaced apart from one another and extending between the first rails **222** and perpendicularly thereto. Together, the structural members **222, 224** surround an interior space **226**. Together, the structural members **222, 224** define a flat rectangular shape with a length ***l*** and a width ***w*** and a height ***h*** that is substantially shorter than the length ***l*** and substantially shorter than the width ***w***. The outer frame **218** defines a top **228** extending in a flat plane and a bottom **230** parallel to the top **228** and spaced apart therefrom by the height ***h*** of the outer frame **218**. The first rails **222** each include a mounting flange **234** extending outwardly away from the interior space **226**. A cross-beam **232** extends between the second rails **224** within the interior space **226** mid-way between the first rails **222**. The cross-beam **232** may serve a number of different purposes, including stiffening or structural rigidity of the battery frame **200**, and/or distributing or absorbing crash loads.

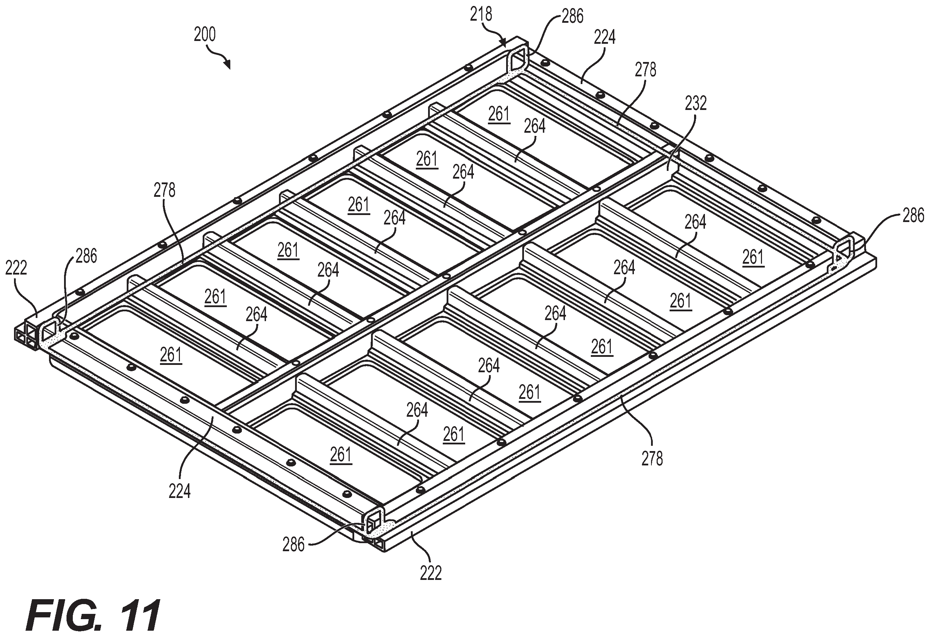

FIG. 11 is a perspective view of the battery frame of FIG. 10 with a partial transparency to illustrate locations of welds **278**, **286**. Specifically, a lower weld **278** connects a floor pan **272** to each of the structural members **222, 224**. The lower welds **278** may be watertight to prevent water or other fluids from entering the interior space **226**. In some embodiments, the lower welds **278** may be friction stir welds (FSW), although other types of welds and/or sealants may be used, which may depend on the types of materials used for either or both of the floor pan **272** and/or the structural members **222, 224**. FIG. 11 also shows end welds **286** connecting each of two ends of each of the second rails **224** to a side of each of the first rails **222** adjacent an end thereof. The end welds **286** may be watertight to prevent water or other fluids from entering the interior space **226**. In some embodiments, the end welds **286** may be friction stir welds, although other types of welds and/or sealants may be used, which may depend on the types of materials used for either or both of the rails **222, 224**. As also shown in FIG. 11, a plurality of crossbars **264** extend perpendicularly from the cross-beam **232** to each of the first rails **222** at regular intervals to define twelve battery chambers **261**, each having a rectangular shape.

Each of the battery chambers **261** is configured to hold one or more batteries that are removable from below the outer frame **218** with the outer frame **218** mounted within a vehicle. In other words, the battery frame **200** is configured to allow one or more of the batteries to be removed and/or installed through the bottom **230** of the outer frame **218** while the outer frame **218** is installed within a vehicle. The battery frame **200** may, for example, be mounted within a floor and/or between frame rails of a vehicle such as a passenger car or truck. Each of the batteries may be separately or independently removable and/or installable from below the outer frame **218** with the battery frame **200** mounted as all or part of a lower part of a vehicle. This may improve serviceability and/or manufacturability when compared to conventional (unitary) battery packs, which can weigh several hundred pounds, by allowing individual batteries to be installed or replaced without requiring the entire battery frame **200** to be removed from the vehicle.

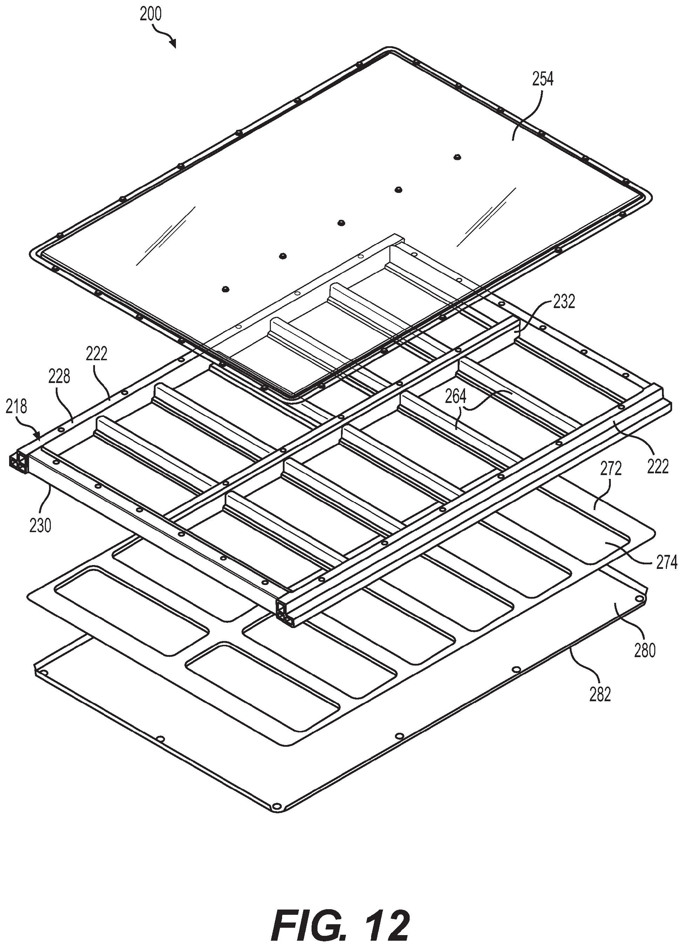

FIG. 12 is an exploded view of the battery frame **200** of FIG. 10 including a lid **254** that encloses the top **228** of the outer frame **218** and the floor pan **272** that encloses the bottom **230** of the outer frame **218**. As shown in FIG. 12, the floor pan **272** includes a plurality of recessed portions **274** that each align with a corresponding one of the battery chambers **261**. FIG. 12 also shows a lower plate **280** for protecting batteries and other equipment from damage from below, such as may be caused by road debris. The lower plate **280** may be formed of metal or another resilient material, such as plastic or a composite material. The lower plate **280** may also serve to improve performance of the battery frame **200** in various crash tests, such as a bollard crash test. The lower plate **280** may have a generally flat shape with a peripheral edge **282** that is bent upwardly and outwardly.

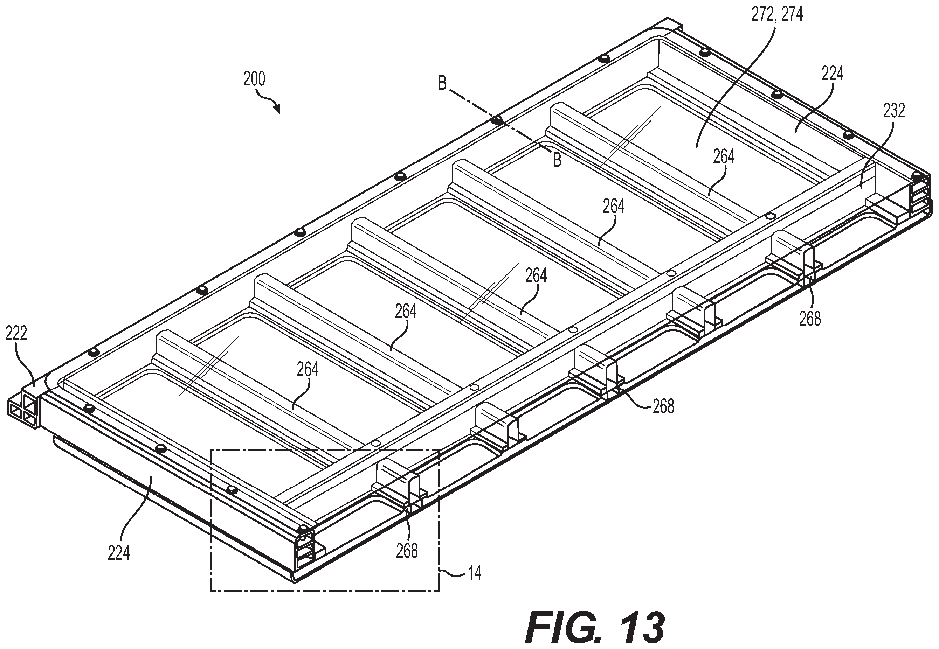

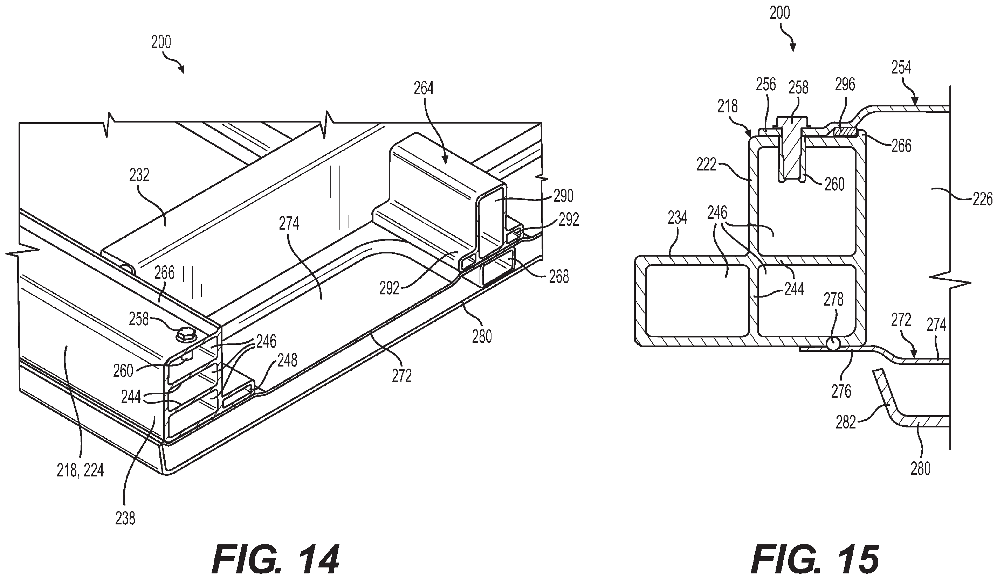

FIG. 13 is a cut-away perspective view showing a cross-section of the battery frame **200**. FIG. 14 is an enlarged view of section 14 of FIG. 13. As shown in FIGS. 13-14, lower ribs **268** having a rectangular cross-section are disposed between three of the crossbars **264** including a center one of the crossbars **264** and two outermost ones of the crossbars **264**. The crossbars each are shaped as an inverted-T, with a central portion **290** having a rectangular cross-section and with two side protrusions **292** each having a cross-section extending outwardly therefrom and adjacent to the floor pan **272**. FIG. 14 also shows internal details of the second rails **224**, with a body portion **238** having a rectangular cross-section and including internal webbing **244** in the form of two horizontal bars within the body portion **238** defining three hollow passages **246**, with each of the having a generally rectangular cross-section. The second rails **224** each define a foot **248** extending inwardly toward the interior space and adjacent to the floor pan **272**. The feet **248** may function to hold the cross-beam **232** and to distribute loads from the cross-beam **232** to the second rails **224**.

FIG. 15 is a cross-sectional view of FIG. 13 along line B - B. FIG. 15 shows details of one of the first rails **222** having an L-shaped cross-section to define the mounting flange **234** that extends outwardly away from the interior space **226**. The first rails **222** also include internal webbing **244** to define three generally rectangular hollow passages **246**. The floor pan **272** defines a flange portion **276** that extends outwardly and beneath each of the rails **222, 224**. Similarly, the lid **254** defines a rim **256** that extends over each of the rails **222, 224** and is secured thereto with a plurality of lid bolts **258**. More specifically, rivet nuts **260** are secured within an upper portion of the rails **222, 224**, with each of the rivet nuts receiving a corresponding one of the lid bolts to secure A lip **266** extends upwardly from each of the first rails **222** for holding a gasket **296** that seals between the lid **254** and each of the first rails **222**. Each of the second rails **224** may have a similar lip **266** and/or a similar gasket **296**. FIG. 15 also shows the lower weld **278** between the flange portion **276** of the floor pan **272** and a lower surface of the first rail **222**. A similar lower weld **278** connects the flange portion **276** to the other ones of the rails **222, 224**.

The battery frame **200** of FIGS. 10-15 may provide several advantages over other designs, such as conventional battery packs. The battery frame **200** includes the outer frame **218** that is partitioned with inner reinforcements **232, 264** that may distribute and/or absorb crash loads, such as crush loads and/or loads generated in a bollard crash test. The battery frame **200** may be assembled from the top **228** and closed with a single stamping part (i.e. the lid **254**). The battery frame **200** may be configured to use a single connection block to provide electrical and/or cooling fluid connections to the vehicle.

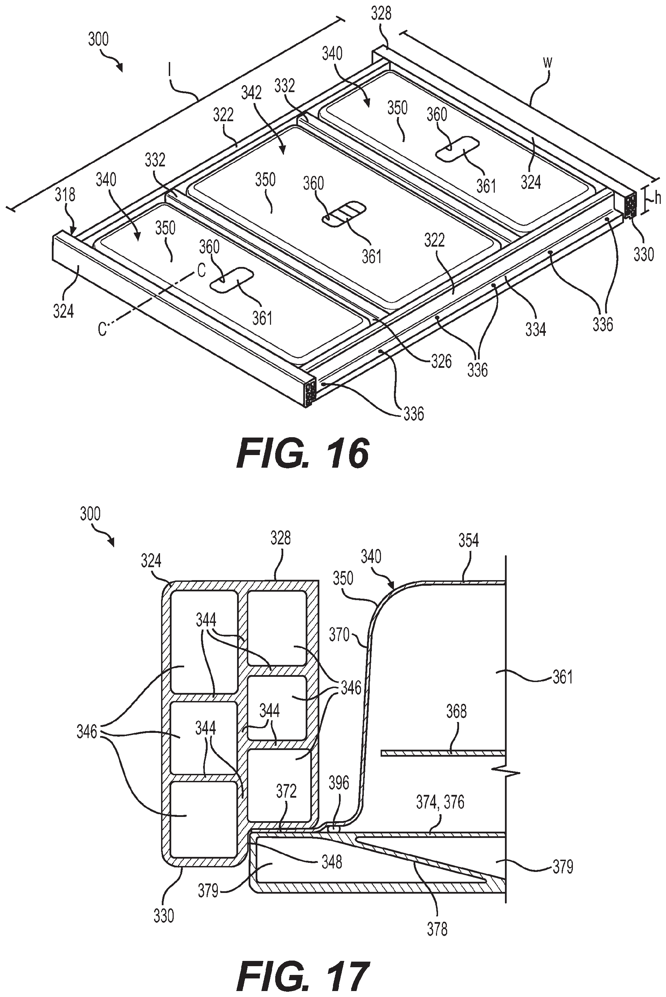

FIGS. 16-21 show a battery frame **300** holding three battery boxes **340, 342** in accordance with some embodiments. The battery frame **300** includes an outer frame **318** formed from a plurality of structural members **322, 324**. In some embodiments, and as shown in FIG. 16, the structural members **322, 324** include a set of two first rails **322** extending parallel to and spaced apart from one another. The structural members **322, 324** also include a set of two second rails **324** extending parallel to and spaced apart from one another and extending between the first rails **322** and perpendicularly thereto. The structural members **322, 324** of the outer frame **318** surround an interior space **326**. Together, the structural members **322, 324** define a flat rectangular shape with a length ***l*** and a width ***w*** and a height ***h*** that is substantially shorter than the length ***l*** and substantially shorter than the width ***w***. The outer frame **318** defines a top **328** extending in a flat plane and a bottom **330** parallel to the top **328** and spaced apart therefrom by the height ***h*** of the outer frame **318**. A pair of cross-beams **332** extend between the first rails **322** within the interior space **326**. The cross-beams **332** may serve a number of different purposes, including holding and/or distributing weight of one or more battery boxes **340, 342**, to increase stiffening or structural rigidity of the battery frame **300**, and/or distributing or absorbing crash loads.

As shown in FIG. 16, each of the first rails **322** includes a mounting flange **334** extending outwardly away from the interior space **326** and defining a plurality of through holes **336** at regular intervals along a length of the first rails **322** for receiving fasteners, such as bolts or screws, for holding the battery frame **300** within a vehicle.

One or more battery boxes **340, 342** are disposed within the interior space **326** of the outer frame **318** and are removable from below the outer frame **318** with the outer frame **318** mounted within a vehicle. In other words, the battery frame **300** is configured to allow one or more of the battery boxes **340, 342** to be removed and/or installed through the bottom **330** of the outer frame **318** while the outer frame **318** is installed within a vehicle. In some embodiments, all of the battery boxes **340, 342** may be independently removable and installable from below the outer frame **318** with the battery frame **300** mounted as all or part of a lower part of a vehicle. The battery frame **300** may, for example, be mounted within a floor and/or between frame rails of a vehicle such as a passenger car or truck. Each of the battery boxes **340, 342** may be separately or independently removable and/or installable from below the outer frame **318** with the battery frame **300** mounted as all or part of a lower part of a vehicle. This may improve serviceability and/or manufacturability when compared to conventional (unitary) battery packs, which can weigh several hundred pounds, by allowing individual ones of the battery boxes **340, 342** to be installed or replaced without requiring the entire battery frame **300** to be removed from the vehicle.

FIG. 16 also shows each of the battery boxes **340, 342** including a cover **350** that defines a port **360** to provide access to a battery chamber **361** therein. The battery chamber **361** may be configured to hold one or more battery cells. The battery chamber **361** may also be configured to hold ancillary equipment, such as electrical conductors for charging and discharging the battery cells and/or temperature regulation equipment, such as heaters, radiators, or conduits for conveying heating or cooling fluids. The port **360** may be used for electrical connections to one or more external conductors (not shown) and/or for coolant fluid connections between the corresponding one of the battery boxes **340, 342** and external fluid conduits (not shown). In some embodiments, and as shown in FIG. 16, two or more battery boxes **340, 342** having different sizes are disposed within the battery frame **300**. Specifically, FIG. 16 shows a second battery box **342** that is larger than each of the first battery boxes **340** and which is mounted between two of the cross-beams **332**.

FIG. 17 is a cross-sectional view of the battery frame **300** along line C - C. FIG. 17 shows internal details of one of the first battery boxes **340**. Each of the battery boxes **340, 342** within the battery frame **300** may have a similar construction. As shown in FIG. 17, the cover **350** of the first battery box **340** has an inverted tray shape defining an upper wall **354** that extends in a generally flat plane that is coplanar with the top **328** of the outer frame **318** with the first battery box **340** mounted in the battery frame **300**. The cover **350** also includes a peripheral wall **370** that surrounds the battery chamber **361** and which extends from the upper wall **354** to a lower flange **372** that extends outwardly from the peripheral wall **370** generally parallel to and spaced away from the upper wall **354**. The cover **350** may be formed of a single piece of material, such as sheet metal, that is drawn, molded, cast, machined, or otherwise formed to define the inverted tray shape. Alternatively, the cover **350** may be formed as an assembly of two or more separate pieces that are joined together to define the inverted tray shape. A lower rib **368** is disposed within the battery chamber **361** for providing structural rigidity.

The first battery box **340** also includes a baseplate **374** comprising one or more elongate members **376** is disposed below the cover **350** for enclosing the battery chamber **361**. The elongate members **376** have a generally rectangular and hollow cross-section with diagonal support members **378** disposed therein to define a plurality of internal passages **379**. The internal passages **379** may be used to convey cooling fluid for regulating the temperature of the first battery box **340**. The elongate members **376** may be formed from extruded metal, such as aluminum, magnesium, or an alloy of two or more metals. The elongate members **376** may have a constant cross-section along all or substantially all of their length. Alternatively, the elongate members **376** may be formed from one or more sheets of material, such as metal. Other materials, such as, for example, composites or polymers, may be used to form the cover **350** and/or the baseplate **374** of the battery boxes **340, 342**. The lower flange **372** is disposed between the baseplate **374** and one or more of the structural members **322, 324** of the outer frame **318** with the corresponding one of the battery boxes **340, 342** mounted within the outer frame **318**. More specifically, the lower flange **372** is sandwiched between the baseplate **374** and one or more of the structural members **322, 324** of the outer frame **318**, with the lower flange **372** extending parallel to and contacting each of the baseplate **374** and one or more of the structural members **322, 324**. A gasket **396** extends along the lower flange **372** between the peripheral wall **370** and the baseplate **374** for providing a watertight seal.

As also shown in FIG. 17, each of the second rails **324** has a generally rectangular shape except for a notch **348** in a lower edge thereof and extending upwardly from the bottom **330**. The notch **348** faces the interior space **326** of the outer frame **318** for receiving one or more of the baseplate **374** of the battery boxes **340, 342**. FIG. 17 also shows an internal webbing **344** within the second rail **324** to define a plurality of hollow passages **346**, each having a generally rectangular cross-section.

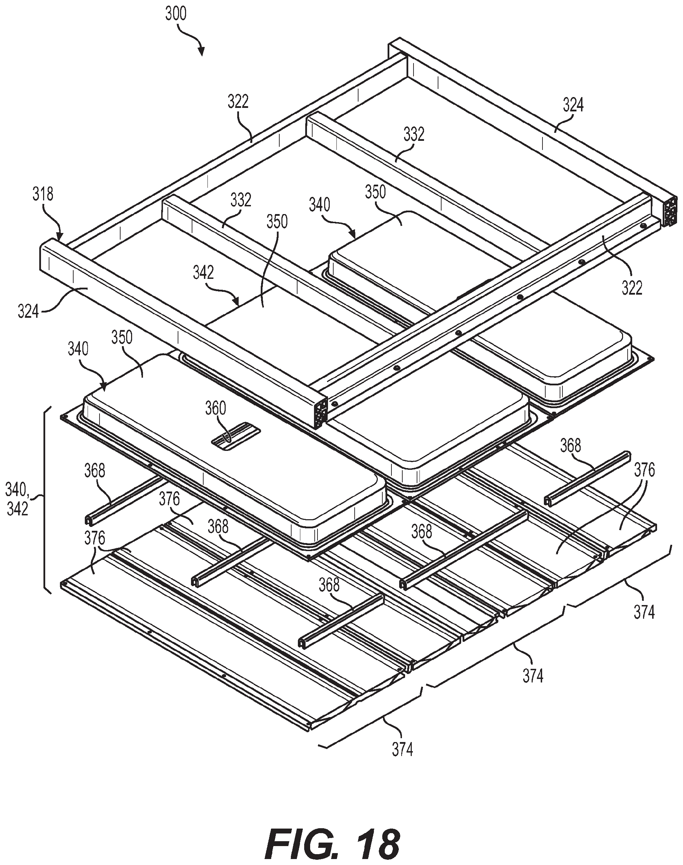

FIG. 18 is an exploded view of the battery frame **300** of FIG. 16. FIG. 18 shows the lower ribs **368** in more detail, with each of the lower ribs **368** having an inverted U-Shape. The lower ribs 368 may be formed from metal that is bent or otherwise formed into the inverted U-Shape. The lower ribs **368** may be secured to two or more of the elongate members **376** for joining them together and forming the baseplates **374**.

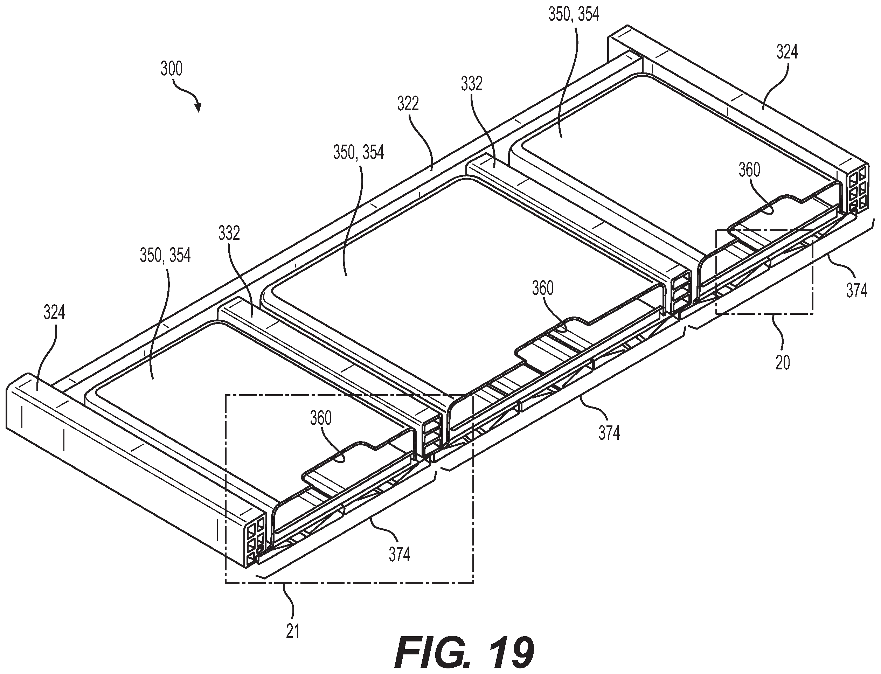

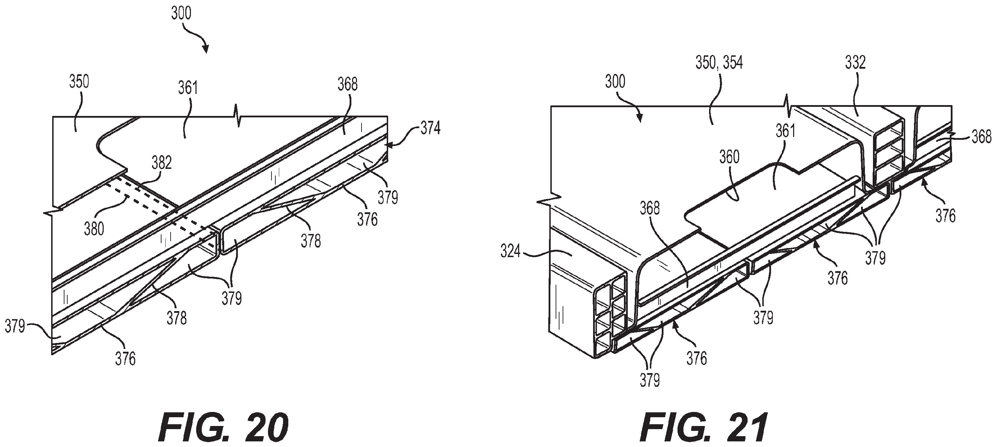

FIG. 19 is a cut-away perspective view showing a cross-section of the battery frame **300**. FIG. 20 is an enlarged view of section 20 of FIG. 19, and FIG. 21 is an enlarged view of section 21 of FIG. 19. FIG. 20 shows a structural weld **380** that extends between adjoining sides of two of the elongate members **376** for joining the elongate members **376** together and forming one of the baseplates **374**. The structural weld **380** may be a friction stir weld, although other types of welds may be used. FIG. 20 also shows a watertight seal **382** that extends parallel to and spaced apart from the structural weld **380** between the adjoining sides of the two elongate members **376**. The watertight seal **382** may be a friction stir weld, although other types of welds or seals may be used. The watertight seal **382** may include a sealant, such as a caulk or an adhesive, and/or a gasket of resilient material, such as rubber or foam.

The battery frame **300** of FIGS. 16-21 may provide several advantages over other designs, such as conventional battery packs. The battery frame **300** provides for improved scalability as a result of the battery boxes **340, 342** having two different sizes. It includes a simple watertight seal using 2-dimensional friction stir welds that can be relatively easily manufactured. Internal and/or external cooling is possible. The outer frame **318** may be made from a combination of aluminum and/or steel. The battery boxes **340, 342** can be installed or removed from the outer frame **318** from below, allowing installation or replacement without removing the entire battery frame **300** from the vehicle.

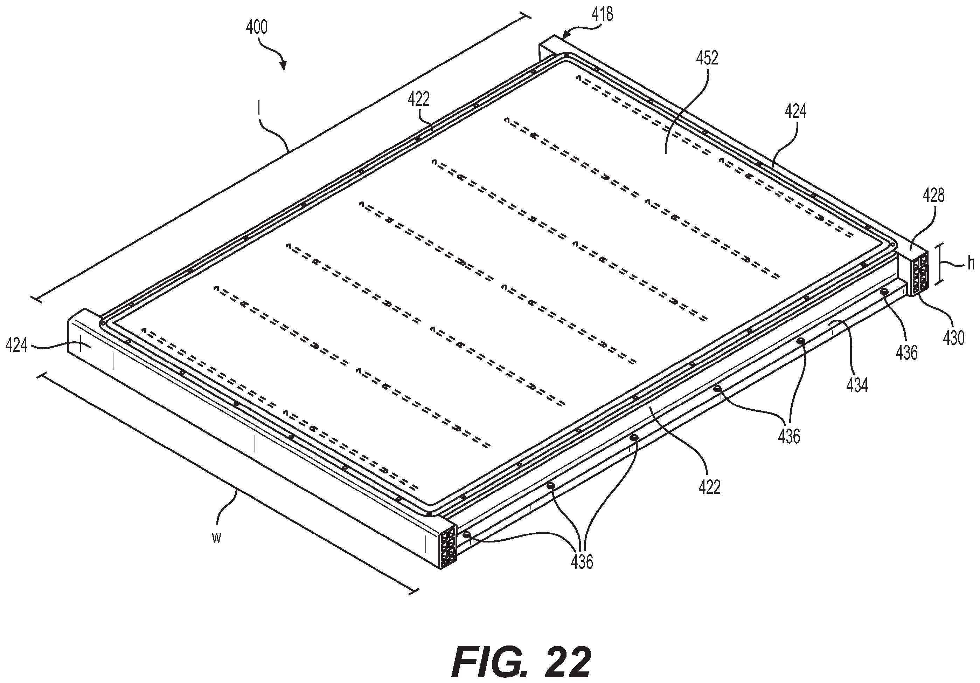

FIGS. 22-26 show a battery frame **400** in accordance with some embodiments. Specifically, the battery frame **400** includes an outer frame **418** formed from structural members **422, 424** including a set of two first rails **422** extending parallel to and spaced apart from one another. The structural members **422, 424** also include a set of two second rails **424** extending parallel to and spaced apart from one another and extending between the first rails **422** and perpendicularly thereto. Together, the structural members **422, 424** surround an interior space **426**. Together, the structural members **422, 424** define a flat rectangular shape with a length ***l*** and a width ***w*** and a height ***h*** that is substantially shorter than the length ***l*** and substantially shorter than the width ***w***. The outer frame **418** defines a top **428** extending in a flat plane and a bottom **430** parallel to the top **428** and spaced apart therefrom by the height ***h*** of the outer frame **418**. The first rails **422** each include a mounting flange **434** extending outwardly away from the interior space **226**. Each of the mounting flanges **434** defines a plurality of through holes **436** at regular intervals along a length of the first rails **422** for receiving fasteners, such as bolts or screws, for holding the battery frame **400** within a vehicle.

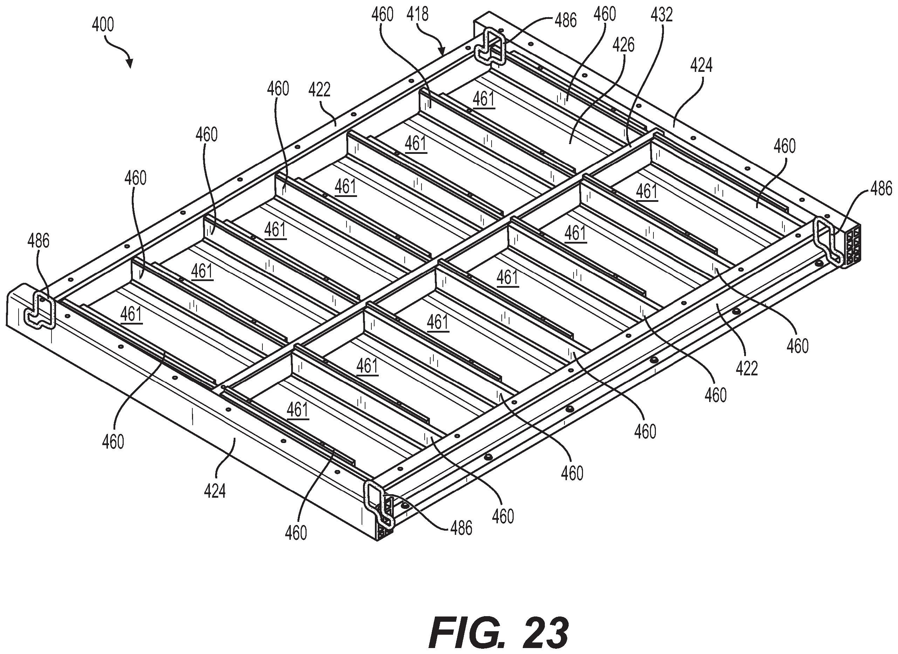

FIG. 23 is a perspective view of the battery frame of FIG. 22 with a partial transparency to illustrate locations of end welds **286** connecting each of two ends of each of the first rails **422** to a side of each of the second rails **424** adjacent an end thereof. The end welds **486** may be watertight to prevent water or other fluids from entering the interior space **226**. In some embodiments, the end welds **486** may be friction stir welds, although other types of welds and/or sealants may be used, which may depend on the types of materials used for either or both of the rails **422, 424**.

As also shown in FIG. 23, a cross-beam **432** extends between the second rails **424** within the interior space **426** mid-way between the first rails **422**. The cross-beam **432** may serve a number of different purposes, including stiffening or structural rigidity of the battery frame **400**, and/or distributing or absorbing crash loads. A plurality of crossbars **460** extend perpendicularly from the cross-beam **432** to each of the first rails **422** at regular intervals to define twelve battery chambers **461**, each having a rectangular shape.

Each of the battery chambers **461** is configured to hold one or more batteries that are removable from below the outer frame **418** with the outer frame **418** mounted within a vehicle. In other words, the battery frame **400** is configured to allow one or more of the batteries to be removed and/or installed through the bottom **430** of the outer frame **418** while the outer frame **218** is installed within a vehicle. The battery frame **400** may, for example, be mounted within a floor and/or between frame rails of a vehicle such as a passenger car or truck. This may improve serviceability and/or manufacturability when compared to conventional (unitary) battery packs, which can weigh several hundred pounds, by allowing individual batteries to be installed or replaced without requiring the entire battery frame **400** to be removed from the vehicle.

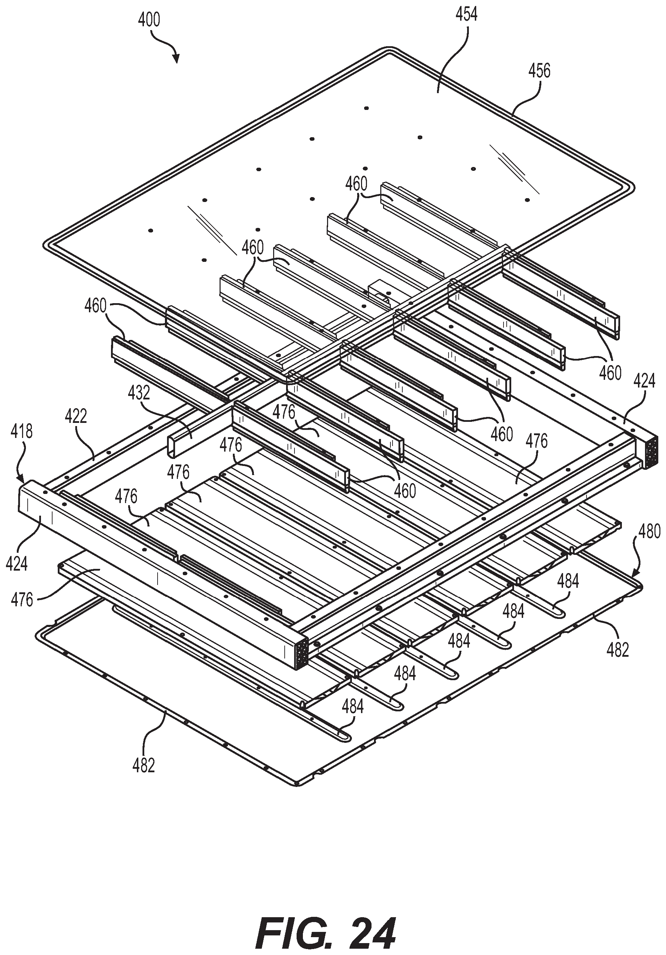

FIG. 24 is an exploded view of the battery frame **400** including a lid **454** that encloses the top **428** of the outer frame **218** and a lower plate **480** that encloses the bottom **430** of the outer frame **418**. The lid **454** includes a rim **456** extending about a peripheral edge thereof. The lower plate **480** has a generally flat shape with a peripheral edge **482** that is bent upwardly and outwardly. The lower plate **480** may be formed of metal or another resilient material, such as plastic or a composite material. As shown in FIG. 24, the lower plate **480** includes a plurality of recessed portions **484** that each extend for a length upwardly toward the outer frame to provide structural rigidity. Each of the recessed portions **484** aligns with a corresponding one of the crossbars **460** and defines holes at regular intervals for receiving fasteners, such as screws or bolts (not shown) for securing the crossbars **460** to the lower plate **480**.

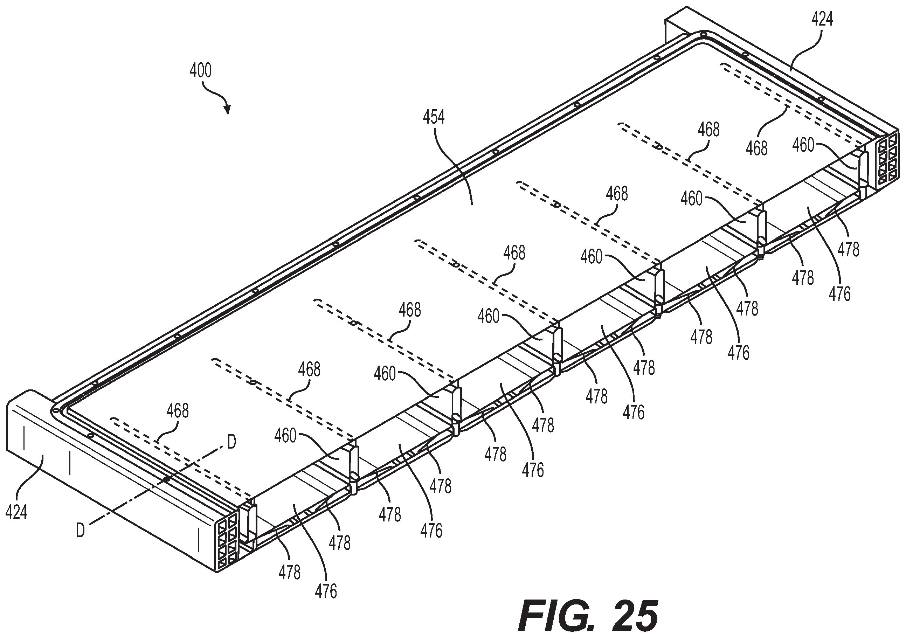

FIG. 25 is a cut-away perspective view showing a cross-section of the battery frame **400**. The battery frame **400** includes a plurality of elongate members **476** each having a generally rectangular and hollow cross-section with diagonal support members **478** disposed therein to define a plurality of internal passages, which may be used to convey cooling fluid for regulating the temperature batteries located thereupon. The elongate members **476** may also serve to improve performance of the battery frame **400** in various crash tests, such as a bollard crash test. The elongate members **476** may be formed from extruded metal, such as aluminum, magnesium, or an alloy of two or more metals. The elongate members **476** may have a constant cross-section along all or substantially all of their length. Alternatively, the elongate members **476** may be formed from one or more sheets of material, such as metal.

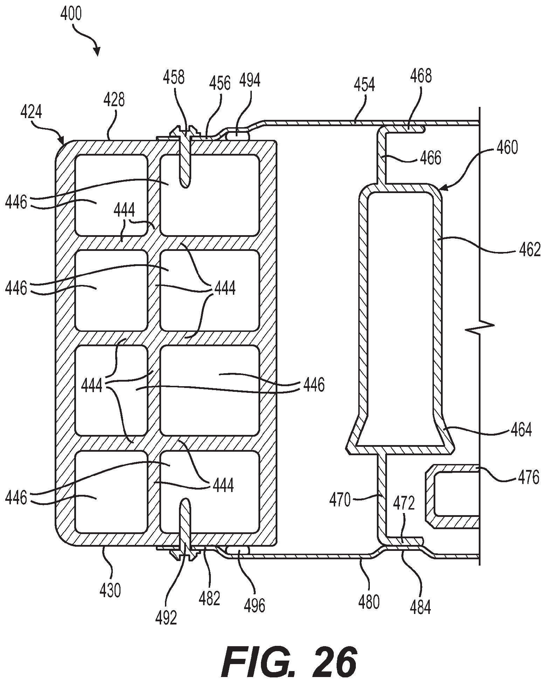

FIG. 26 is a cross-sectional view of the battery frame **400** along line D - D as shown in FIG. 25. Specifically, FIG. 26 shows a cross-section of one of the second rails 424 having a generally rectangular cross-section, with an internal webbing **444** therein to define a plurality of hollow passages **446**, each having a generally rectangular cross-section. FIG. 26 also shows the profile of the lid **454** including the rim **456** extending along and adjacent to the top **428** of the second rail **424** and secured thereto with a lid screw **458**. The lid **454** may be secured to each of the rails **422, 424** with a plurality of lid screws **458** at regular intervals. Alternatively or additionally, other fasteners such as bolts, clips, or clamps and/or an adhesive or a weld may be used to secure the lid **454** to the rails **422, 424**. An upper gasket **494** of resilient material, such as rubber or foam, is sandwiched between the top **428** of the rails **422, 424** and the lid **454** for providing a watertight seal therebetween. FIG. 26 also shows the peripheral edge **482** of the lower plate **480** secured to the bottom **430** of the second rail **424** with a plate screw **492**. The lower plate **480** may be secured to each of the rails **422, 424** with a plurality of plate screw **492** at regular intervals. Alternatively or additionally, other fasteners such as bolts, clips, or clamps and/or an adhesive or a weld may be used to secure the lower plate **480** to the rails **422, 424**. A lower gasket **496** of resilient material, such as rubber or foam, is sandwiched between the bottom **430** of the rails **422, 424** and the lower plate **480** for providing a watertight seal therebetween.

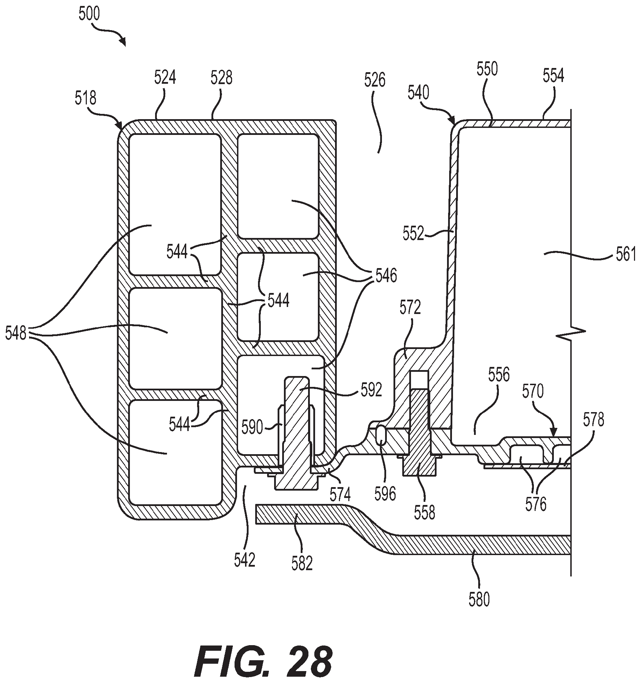

FIG. 28 also shows a cross-section of one of the crossbars **460**. All of the crossbars **460** may have a similar construction, which may be formed from one or more pieces of extruded metal, such as aluminum, magnesium, or an alloy of two or more metals. The crossbars **460** may have a constant cross-section along all or substantially all of their length. Specifically, each of the crossbars **460** includes a body portion **462** having a generally rectangular and hollow shape that may be used as a conduit for cooling fluid and/or for routing electrical conductors. The body portion **462** defines a flared bottom that extends outwardly for preventing a corresponding one of the elongate members **476** from moving upwardly between the body portions **462**. Each of the crossbars **460** also includes an upper portion **466** extending upwardly from the body portion **462** to an upper flange **468** that is secured to the lid **454** with one or more fasteners, such as screws or bolts or clips or rivets. Alternatively or additionally, the upper flange **468** may be secured to the lid **454** with one or more welds. Each of the crossbars **460** also includes a lower portion **470** extending downwardly from the body portion **462** to a lower flange **472** that is secured to the lower plate **480** along one of the recessed portions **484** with one or more fasteners, such as screws or bolts or clips or rivets. Alternatively or additionally, the lower flange **472** may be secured to the lower plate **480** with one or more welds. Together, the body portion **462**, the lower portion **470**, and the lower flange **472** define a C-shaped cross-section configured to receive and retain an end of a corresponding one of the elongate members **476**. Each of the elongate members **476** and batteries disposed thereupon, may be removed from below the battery frame **400** by removing the lower plate **480** and deflecting one or more of the crossbars **460** outwardly. Each of the batteries may be separately or independently removable and/or installable from below the outer frame **418** with the battery frame **400** mounted as all or part of a lower part of a vehicle by removing or displacing individual ones of the elongate members **476**.

The battery frame **400** of FIGS. 22-26 may provide several advantages over other designs, such as conventional battery packs. The battery frame **400** provides for a relatively high energy density when compared with other, alternative designs. The elongate members **476** may function to distribute and/or absorb crash loads, such as crush loads and/or loads generated in a bollard crash test. The elongate members **476** may also define cooling passages for circulation of cooling fluid for regulating the temperature of the batteries disposed thereupon. The battery frame **400** may include closing plates (i.e. the lid **454** and the lower plate **480**) that are each formed from very thin sheet metal. The battery frame **400** may be configured to use a single connection block to provide electrical and/or cooling fluid connections to the vehicle. The outer frame **318** and/or the internal supports, such as the cross-beam **432** and/or the crossbars **460**, may be made from a combination of aluminum and/or steel.

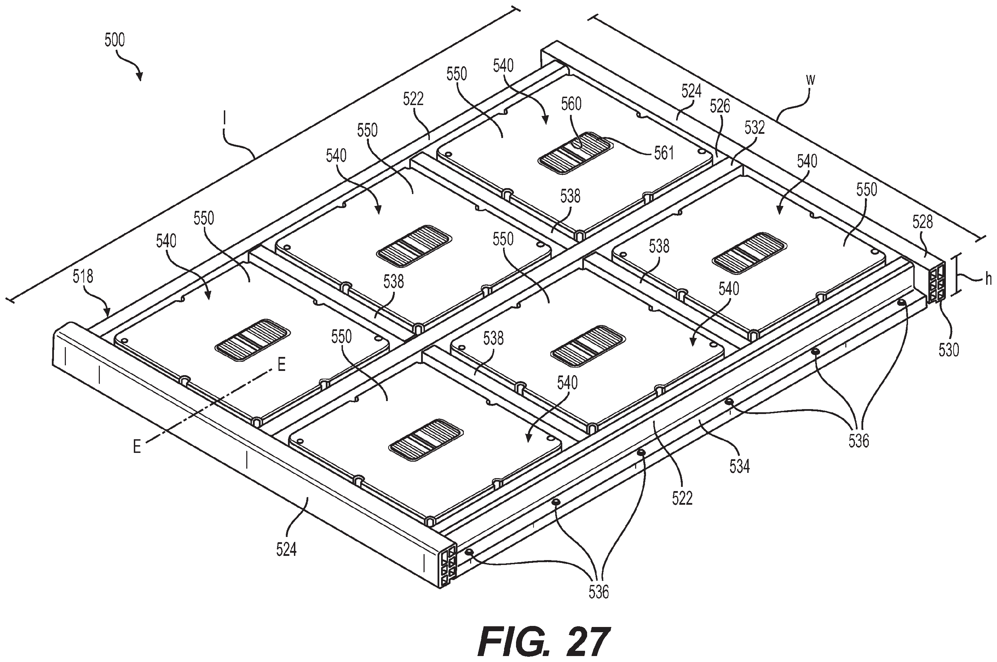

FIGS. 27-29 show a battery frame **500** in accordance with some embodiments. Specifically, the battery frame **500** includes an outer frame **518** formed from structural members **522, 524** including a set of two first rails **522** extending parallel to and spaced apart from one another. The structural members **522, 524** also include a set of two second rails **524** extending parallel to and spaced apart from one another and extending between the first rails **522** and perpendicularly thereto. Together, the structural members **522, 524** surround an interior space **526**. Together, the structural members **522, 524** define a flat rectangular shape with a length ***l*** and a width ***w*** and a height ***h*** that is substantially shorter than the length ***l*** and substantially shorter than the width ***w***. The outer frame **518** defines a top **528** extending in a flat plane and a bottom **530** parallel to the top **528** and spaced apart therefrom by the height ***h*** of the outer frame **518**. The first rails **522** each include a mounting flange **534** extending outwardly away from the interior space **526** and defining a plurality of through holes **536** at regular intervals along a length of the first rails **522** for receiving fasteners, such as bolts or screws, for holding the battery frame **500** within a vehicle. A cross-beam **532** extends between the second rails **524** within the interior space **526** mid-way between the first rails **522**. The cross-beam **532** may serve a number of different purposes, including stiffening or structural rigidity of the battery frame **500**, and/or distributing or absorbing crash loads. A pair of crossbars **538** extends between the cross-beam **532** and each of the first rails **522** to divide the interior space **526** into six equal segments, each containing a battery box **540**. Each of the battery boxes **540** includes an upper housing **550** that defines a port **560** to provide access to a battery chamber **561** within the battery box **540**. The ports **560** may be used for electrical connections to one or more external conductors (not shown) and/or for coolant fluid connections between the battery boxes **540** and external fluid conduits (not shown).

One or more of the battery boxes **540** are disposed within the interior space **526** of the outer frame **518** and are removable from below the outer frame **518** with the outer frame **518** mounted within a vehicle. In other words, the battery frame **500** is configured to allow one or more of the battery boxes **540** to be removed and/or installed through the bottom **530** of the outer frame **518** while the outer frame **518** is installed within a vehicle. In some embodiments, all of the battery boxes **540** may be independently removable and installable from below the outer frame **518** with the battery frame **500** mounted as all or part of a lower part of a vehicle. The battery frame **500** may, for example, be mounted within a floor and/or between frame rails of a vehicle such as a passenger car or truck. Each of the battery boxes **540** may be separately or independently removable and/or installable from below the outer frame **518** with the battery frame **500** mounted as all or part of a lower part of a vehicle. This may improve serviceability and/or manufacturability when compared to conventional (unitary) battery packs, which can weigh several hundred pounds, by allowing individual ones of the battery boxes **540** to be installed or replaced without requiring the entire battery frame **500** to be removed from the vehicle.

FIG. 28 is a cross-sectional view of the battery frame **500** FIG. 27 along line E - E. Specifically, FIG. 28 shows the connection between one of the battery boxes **540** and the outer frame **518** of the battery frame **500**. FIG. 28 shows details of one of the battery boxes **540**. Each of the battery boxes **540** may have an identical construction. Alternatively, the battery boxes **540** may be different from one another. For example, two battery boxes having different sizes may be used within the battery frame **500**. In the example embodiment shown in FIGS. 27-29, the upper housing **550** includes an upper wall **554** that is flat and coplanar with the top **528** of the outer frame **518**. The upper housing **550** also includes a peripheral wall **552** having four equal sides and which encircles battery chamber **561**. The upper housing defines an open bottom **556**. As shown in FIG. 28, the upper housing **550** also includes a rim portion **572** that surrounds the open bottom, and which may be thicker than the peripheral wall **552** and configured to receive a box bolt **558**. The upper housing **550** may be formed as a single piece by, for example, casting and/or machining. Alternatively, the upper housing **550** may be as an assembly of two or more pieces that may be joined, for example, by welding.

The battery box **540** also includes a floor plate **570** configured to enclose the open bottom **556** of the upper housing **550**. The floor plate **570** includes a peripheral flange **574** that extends outwardly beyond the upper housing **550** and around the periphery of the battery box **540** for mounting the battery box **540** within the outer frame **518**. A gasket **596** is disposed within a channel between upper housing **550** and the floor plate **570** to provide a waterproof seal therebetween. The floor plate **570** also defines a plurality of cooling channels **576** upon an outside surface thereof for conveying a cooling fluid to regulate the temperature of the battery box **540**, and particularly to regulate the temperature of one or more battery cells within the battery box **540**. A sealing plate **578** is disposed along the floor plate **570** to enclose the cooling channels **576**. The floor plate **570** may be formed as a single piece by, for example, casting and/or machining. Alternatively, the floor plate **570** may be as an assembly of two or more pieces that may be joined, for example, by welding.

FIG. 28 also shows a cross-section of one of the second rails **524** having a generally rectangular shape except for a notch **542** in a lower edge thereof. The notch **542** faces the interior space **526** of the outer frame **518** for receiving the peripheral flange **574** holding the battery boxes **540**. An internal webbing **544** is disposed within the second rail **524** to define a plurality of hollow passages **546** each having a generally rectangular cross-section. A rivet nut **590** extends upwardly into the second rail **524** within the notch **542** for receiving a mounting bolt **592** for holding the peripheral flange **574** of one of the battery boxes **540** to the second rail **524**. In other words, each the battery boxes **540** is held within the outer frame **518** by the peripheral flange **574**, which support the battery box **540** with fasteners in the form of the mounting bolts **592**, which connect the peripheral flange **574** to one of the structural members **122, 124** of the outer frame **118**. Other types of fasteners such as, for example, screws, rivets, clips, or clamps may connect the battery boxes **540** to the outer frame **518**.

FIG. 28 also shows a lower plate **580** for protecting batteries and other equipment from damage from below, such as may be caused by road debris. The lower plate **580** may be formed of metal or another resilient material, such as plastic or a composite material. The lower plate **580** may also serve to improve performance of the battery frame **500** in various crash tests, such as a bollard crash test. The lower plate **580** may have a generally flat shape with a peripheral edge **582** that is bent upwardly and outwardly and which extends into the notch **542** in the second rails **524**.

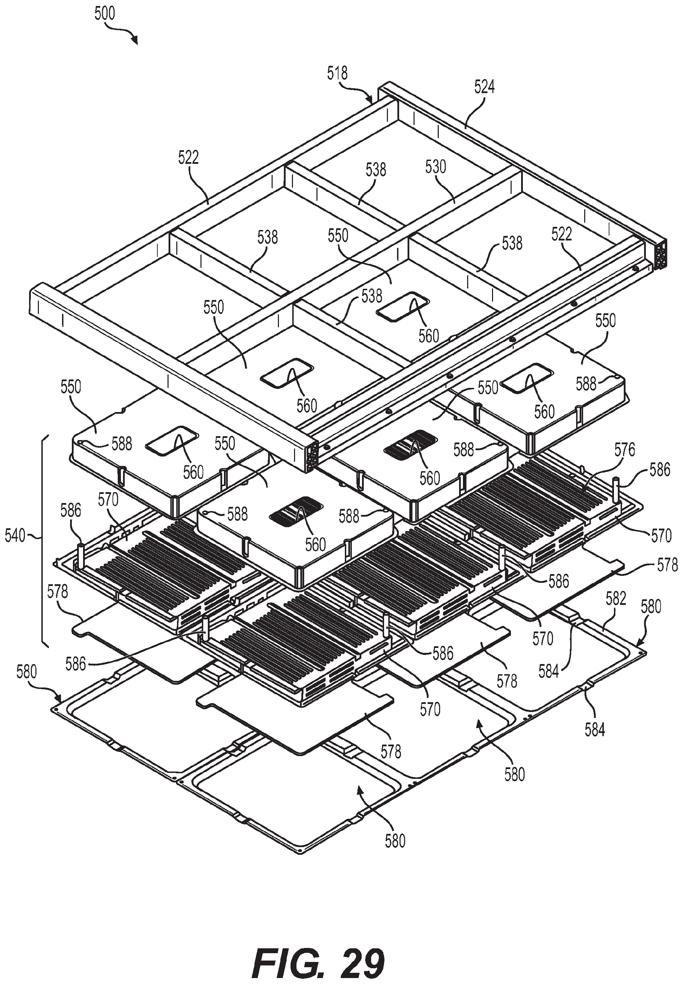

FIG. 29 is an exploded view of the battery frame of FIG. 27. FIG. 29 shows the floor plates **570** including tubular members **586** that extend upwardly through the upper housing **550** and which are in fluid communication with openings **588** in the upper housing **550** for circulation of cooling fluid to and from the cooling channels **576** in the floor plates **570**. FIG. 29 also shows the lower plates **580** disposed below the battery boxes **540**. The peripheral edge **582** of the lower plates **580** defines lowered portions **584** that extend downwardly away from the outer frame **518** to provide clearance for the mounting bolts **592** and to prevent the lower plate **580** from contacting the mounting bolts **592**. FIG. 29 shows separate lower plates **580** disposed below each of the battery boxes **540**. Alternatively, a lower plate **580** may be disposed below two or more of the battery boxes **540**. In some embodiments, the battery frame **500** may have a single lower plate disposed along the bottom **530** of all of the outer frame **518**.

The battery frame **500** of FIGS. 27-29 may provide several advantages over other designs, including conventional battery packs. The battery frame **500** may include relatively small battery boxes **540** having housings **550, 570** of cast metal that may be formed with integrated cooling channels **576**. The battery frame **500** may be manufactured without any watertight welds.
The battery boxes **540** can be installed or removed from the outer frame **518** from below, allowing installation or replacement without removing the entire battery frame **500** from the vehicle. The battery frame **500** can be constructed using various combinations of materials. The relatively small battery boxes **540** allow the battery frame **500** to be easily scaled to include a number of the battery boxes **540** to meet different capacity requirements. In other words, variations of the battery frame **500** may be manufactured using different numbers of the battery boxes **540** for different applications. For example, a smaller version of the battery frame **500** may be used in a plug-in hybrid electric vehicle (PHEV) application, while a larger version of the battery frame **500** may be used in a full battery electric vehicle (BEV) application.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.
The further embodiments of the present invention are as follows:
Embodiment 1. A battery frame comprising:
   a plurality of structural members defining an outer frame having a flat shape with a length and a width and a height shorter than the length and shorter than the width;
   at least one battery box disposed within the outer frame and removable from below the outer frame with the outer frame mounted within a vehicle.
Embodiment 2. The battery frame of embodiment 1, wherein the at least one battery box includes two or more battery boxes each configured to be independently installed within the outer frame.
Embodiment 3. The battery frame of embodiment 1, wherein the plurality of structural members includes a first structural member joined to a second structural member by a structural joint configured to hold a load force; and
   a watertight seal between the first structural member the second structural member and spaced apart from the structural joint.
Embodiment 4. The battery frame of embodiment 3, wherein the structural joint includes a friction stir weld.
Embodiment 5. The battery frame of embodiment 3, wherein the watertight seal includes a friction stir weld.
Embodiment 6. The battery frame of embodiment 1, wherein the plurality of structural members comprise two first rails extending parallel to and spaced apart from one another and two second rails extending parallel to and spaced apart from one another and perpendicular to the first rails.
Embodiment 7. The battery frame of embodiment 6, wherein at least one of the first rails or the second rails is formed of metal having a constant cross-section along an entire length thereof.
Embodiment 8. The battery frame of embodiment 6, wherein at least one of the first rails or the second rails is formed of extruded aluminum.
Embodiment 9. The battery frame of embodiment 1, wherein the at least one battery box includes two or more battery boxes having different sizes.
Embodiment 10. The battery frame of embodiment 1, wherein the at least one battery box comprises a housing having a peripheral wall and a floor pan and defining an open top, the at least one battery box also comprises a lid enclosing the open top of the housing; and
   wherein the at least one battery box is held within the outer frame by a bracket supporting the at least one battery box and with a fastener connecting the bracket to one of the plurality of structural members of the outer frame.
Embodiment 11. The battery frame of embodiment 1, wherein the at least one battery box includes a cover sealed to a baseplate of extruded metal.
Embodiment 12. The battery frame of embodiment 11, wherein the cover includes a lower flange disposed between the baseplate and one of the structural members of the outer frame.
Embodiment 13. The battery frame of embodiment 11, wherein the baseplate of extruded metal comprises two elongate members of extruded metal secured together along an adjoining side edge of each of the two elongate members.
Embodiment 14. The battery frame of embodiment 13, further comprising:
   a structural weld securing together the two elongate members of the baseplate; and
   a watertight seal extending between the two elongate members and spaced apart from the structural weld.
Embodiment 15. The battery frame of embodiment 1, wherein the at least one battery box comprises a housing having an open bottom, and a floor plate enclosing the open bottom of the housing, the floor plate extending outwardly beyond the housing to define a peripheral flange; and
   wherein the at least one battery box is secured within the outer frame by a fastener connecting the peripheral flange to one of the plurality of structural members of the outer frame.

## Claims

1. A battery frame (10, 100) comprising:
a plurality of structural members (22, 24, 122, 124) defining an outer frame (18, 118);
at least one battery box (40, 42, 44, 140) disposed within the outer frame (18, 118) and removable from below the outer frame (18, 118) with the outer frame (18, 118) mounted within a vehicle; and
wherein the at least one battery box (40, 42, 44, 140) includes:
a housing (46, 150) defining a peripheral wall (170), a lid (54, 154) secured to the housing (46), a gasket (196) disposed around a top of the peripheral wall (170) of the housing (46, 150), and a spacer (194, 199) of rigid material configured to hold the lid (54, 154) a fixed distance away from a portion of the housing (46, 150) and to thereby provide a consistent deformation of the gasket (196).

2. The battery frame of claim 1, further including a standoff sleeve (199) configured to receive a lid bolt therethrough for securing the lid to the housing, wherein the standoff sleeve (199) defines the spacer for providing the consistent deformation of the gasket (196).

3. The battery frame of claim 1, wherein the spacer (194, 199) is disposed adjacent to the gasket (196).

4. The battery frame of claim 1, wherein the at least one battery box (40, 42, 44, 140) includes two or more battery boxes each configured to be independently installed within the outer frame (18, 118).

5. A battery frame (10, 300) comprising:
a plurality of structural members (22, 24, 322, 324) defining an outer frame (18, 318);
at least one battery box (40, 42, 44, 340) disposed within the outer frame (18, 318) and removable from below the outer frame (18, 318) with the outer frame (18, 318) mounted within a vehicle; and
wherein the plurality of structural members (22, 24, 322, 324) comprise two first rails (22, 322) extending parallel to and spaced apart from one another and two second rails (24, 324) extending parallel to and spaced apart from one another and perpendicular to the first rails (22, 322), wherein the at least one battery box (40, 42, 44, 340) includes a cover (40, 350) sealed to a baseplate (56, 374), wherein the cover (40, 350) includes a lower flange (58, 372) disposed between the baseplate (56, 374) and one of the structural members (22, 24, 322) of the outer frame (18, 318), wherein the at least one battery box (40, 42, 44, 340) is secured within the outer frame (18, 318) by a fastener (62) connecting the lower flange (58, 372) to one of the plurality of structural members (22, 24, 322, 324) of the outer frame (18, 318).

6. The battery frame of claim 5, further comprising a gasket (396) disposed between the cover (40, 350) and the baseplate (56, 374) to provide a waterproof seal therebetween.

7. The battery frame of claim 5, wherein the baseplate is made of extruded metal.

8. The battery frame of claim 5, wherein the baseplate is made of sheet metal.

9. The battery frame of claim 5, wherein the at least one battery box (40, 42, 44, 140) includes two or more battery boxes each configured to be independently installed within the outer frame (18, 118).

10. The battery frame of claim 5, wherein the baseplate (56, 374) comprises two elongate members (376) having adjoining sides joined together by a structural weld (380), wherein the baseplate (56, 374) further includes a watertight seal (382) between the adjoining sides of the two elongate members (376), parallel to and spaced apart from the structural weld.

11. The battery frame of claim 10, wherein the structural weld (380) includes a friction stir weld.

12. The battery frame of claim 10, wherein the watertight seal (382) includes a friction stir weld.

13. The battery frame of claim 10, wherein the watertight seal (382) is made of a resilient material.

14. The battery frame of claim 10, wherein the watertight seal (382) includes at least one of an adhesive or a gasket.

15. A battery frame (500) comprising:
a plurality of structural members (522, 524, 530) defining an outer frame (518);
at least one battery box (540) disposed within the outer frame (518) and removable from below the outer frame (518) with the outer frame (518) mounted within a vehicle; and
wherein the at least one battery box (540) includes:
an upper housing (550) enclosing a battery chamber (561) and defining an open bottom (556), and a floor plate (570) of cast metal configured to enclose the open bottom (556) of the upper housing (550), wherein the floor plate (570) includes a peripheral flange (574) that extends outwardly beyond the upper housing (550) and around the periphery of the at least one battery box (540) for mounting the at least one battery box (540) within the outer frame (518).
